# EUROPEAN PATENT APPLICATION

(11) **EP 4 369 786 A1**
(43) Date of publication of application: **15.05.2024**
(21) Application number: 22837069.8
(22) Date of filing: 11.07.2022
(51) Int. Cl.: H04W 36/00

(54) **BEAM TRANSMITTING METHOD AND DEVICE, BASE STATION, TERMINAL, AND STORAGE MEDIUM**

(30) Priority: 09.07.2021 CN 202110777855
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100053 (CN); XU, Xiaodong, Beijing 100053 (CN); HU, Nan, Beijing 100053 (CN)
(74) Representative: GPI Brevets
(86) International application number: PCT/CN2022/104851
(87) International publication number: WO 2023/280324

(57) **Abstract**

A beam sending method, a device, a base station, a terminal and a storage medium are provided. The method includes: sending a first part of SSB beams of a first cell or not sending SSB beams of a first cell; when a set condition is met, or when set time information and/or frequency domain information are met, activating and/or sending the SSB beams of the first cell; the activated and/or sent SSB beams are part or all of other SSB beams if the SSB beams are sent, or all or part of the SSB beams of the first cell if the SSB beams are not sent; where the SSB beams of the first cell are divided into at least two parts; the set time information and/or frequency domain information are configured by a network in advance through a signaling.

## Description

### CROSS REFERENCE OF RELATED APPLICATION

The present disclosure claims a priority of Chinese patent disclosure No. 202110777855.5 filed on July 9, 2021, which is incorporated herein by reference in its entirety.

### TECHNICAL FIELD

The present disclosure relates to the field of wireless technology, and in particular to a beam sending method, a beam measurement method, a device, a base station, a terminal and a storage medium.

### BACKGROUND

In the related art, it is necessary to always keep the fifth generation mobile communication technology (5G, 5th Generation Mobile Communication Technology) cell public beam coverage and the user beam coverage basically to be overlap, that is, the synchronization signal block (SSB) beam and the channel state information reference signal (CSI-RS) beam basically overlap. However, the above-mentioned beam transmission mechanism will cause the overhead of the terminal to increase.

### SUMMARY

In order to solve related technical problems, embodiments of the present disclosure provide a beam sending method, a beam measurement method, a device, a base station, a terminal and a storage medium.

The technical solution of the embodiment of the present disclosure is implemented as follows:

The embodiment of the present disclosure provides a beam sending method, which is applied to a base station. The method includes:
Transmitting a first portion of the SSB beams of the first cell or not sending the SSB beams of the first cell;
sending a first part of synchronization signal block (SSB) beams of a first cell or not sending SSB beams of a first cell;
when a set condition is met, or when set time information and/or frequency domain information are met, activating and/or sending the SSB beams of the first cell; the activated and/or sent SSB beams are part or all of other SSB beams if the SSB beams are sent, or all or part of the SSB beams of the first cell if the SSB beams are not sent; where
the SSB beams of the first cell are divided into at least two parts; the set time information and/or frequency domain information are configured by a network in advance through a signaling.

Embodiments of this application also provide a beam measurement method, which is applied to terminals. The method includes:
after accessing a first cell and entering a connected state, not performing a measurement of synchronization signal block (SSB) beams, only monitoring and/or measuring a dedicated beam;
when there is no available dedicated beam, reporting a first measurement event to a base station; where
the first measurement event is used by the base station to activate and/or send all or part of the SSB beams of the first cell.

An embodiment of the present disclosure also provides a beam sending device, including:
a first sending unit, configured to send a first part of synchronization signal block (SSB) beams of a first cell or not sending SSB beams of a first cell;
a second sending unit, configured to, when a set condition is met, or when set time information and/or frequency domain information are met, activate and/or send the SSB beams of the first cell; the activated and/or sent SSB beams are part or all of other SSB beams if the SSB beams are sent, or all or part of the SSB beams of the first cell if the SSB beams are not sent; where
the SSB beams of the first cell are divided into at least two parts; the set time information and/or frequency domain information are configured by a network in advance through a signaling.

An embodiment of the present disclosure also provides a beam measurement device, including:
a first measurement unit, configured to, after accessing a first cell and entering a connected state, not perform a measurement of synchronization signal block (SSB) beams, only monitor and/or measure a dedicated beam;
a first reporting unit, configured to, when there is no available dedicated beam, report a first measurement event to a base station; where
the first measurement event is used by the base station to activate and/or send all or part of the SSB beams of the first cell.

An embodiment of the present disclosure also provides a base station, including: a first processor and a first communication interface; where
the first communication interface is configured to: send a first part of the SSB beams of the first cell or not to send the SSB beams of the first cell, and when a set condition is met, or when set time information and/or frequency domain information are met, activate and/or send the SSB beams of the first cell; where the activated and/or sent SSB beams are part or all of other SSB beams if the SSB beams are sent, or all or part of the SSB beams of the first cell if the SSB beams are not sent; where
the SSB beams of the first cell are divided into at least two parts; the set time information and/or frequency domain information are configured by a network in advance through a signaling.

An embodiment of the present disclosure also provides a terminal, including: a second processor and a second communication interface; where
the second communication interface is configured to, after accessing a first cell and entering a connected state, not perform a measurement of synchronization signal block (SSB) beams, only monitor and/or measure a dedicated beam, and when there is no available dedicated beam, report a first measurement event to a base station; where,
the first measurement event is used by the base station to activate and/or send all or part of the SSB beams of the first cell.

An embodiment of the present disclosure also provides a base station, including: a first processor and a first memory configured to store a computer program executable on the processor,
where the first processor is configured to, when executing the computer program, perform the steps of the above method.

An embodiment of the present disclosure also provides a terminal, which is characterized in that it includes: a second processor and a second memory configured to store a computer program executable on the processor,
where the second processor is configured to, when executing the computer program, perform the steps of the above method.

An embodiments of the present disclosure also provide a storage medium on which a computer program is stored, when the computer program is executed by a processor, the steps of any one of the above beam sending method are performed, or the steps of any one of the above beam measurement method is performed.

Embodiments of the present disclosure provide a beam sending method, a beam measurement method, a device, a base station, a terminal, and a storage medium, where the SSB beams of the first cell is divided into at least two parts, the base station sends a first part of SSB beams of a first cell or not send SSB beams of a first cell; when a set condition is met, or when set time information and/or frequency domain information are met, the base station activates and/or sends the SSB beams of the first cell; the activated and/or sent SSB beams are part or all of other SSB beams if the SSB beams are sent, or all or part of the SSB beams of the first cell if the SSB beams are not sent. According to the embodiments of the present disclosure, the base station does not need to send all the SSB beams of the first cell all the time, thereby reducing the terminal's measurement overhead of the SSB beams, and reducing the interference of the side lobes of the SSB beams to the ground cell.

### BRIEF DESCRIPTION OF THE DRAWINGS

Fig. 1 is a schematic flow chart of a beam sending method according to an embodiment of the present disclosure;
Fig. 2 is an example diagram of a beam sending method according to an embodiment of the present disclosure;
Fig. 3 is an example diagram of another beam sending method according to the embodiment of the present disclosure;
Fig. 4 is a schematic flow chart of a beam measurement method according to an embodiment of the present disclosure;
Fig. 5 is a schematic structural diagram of a beam sending device according to an embodiment of the present disclosure;
Fig. 6 is a schematic structural diagram of a beam measurement device according to an embodiment of the present disclosure;
Fig. 7 is a schematic structural diagram of a base station according to an embodiment of the present disclosure; and
Fig. 8 is a schematic structural diagram of a terminal according to an embodiment of the present disclosure.

### DETAILED DESCRIPTION

The present disclosure will be described in further detail below in conjunction with the accompanying drawings and embodiments.

In related technologies, after the terminal is turned on, it will receive information from wireless access network nodes, including but not limited to New Radio (NR, New Radio) base stations (gNB, gNodeB), Long Term Evolution (LTE, Long Term Evolution) base stations or third party Synchronization channel and system messages sent by 3rd generation mobile communication technology (3G, 3rd-Generation) base stations (such as Radio Network Controller (RNC, Radio Network Controller) or /NodeB). Among them, the system message carries random access-related parameters including the cell's Physical Random Access Channel (PRACH) configuration index, logical root sequence initial value, cyclic shift index, uplink and downlink configuration index, etc. To access the gNB network, the terminal must determine a serving cell through cell search, obtain the system information of the cell and initiate a random access process , thereby obtaining frequency synchronization and symbol synchronization with the cell, obtaining the starting position of the downlink frame, and Determine the physical cell identity ( PCI, Physical-layer Cell Identity) of the cell . In practical applications, the terminal not only needs to perform cell search when it is powered on, but also needs to search for neighboring cells after completing random access in order to support mobility (mobility), thereby deciding whether to perform handover or cell reselection ( cell re-selection). Therefore, it is necessary to always keep the public beam coverage of the 5G cell basically coincident with the user beam coverage, that is, the SSB and CSI-RS basically coincide. Otherwise, the terminal will not be able to use SSB to discover the cell after the call is dropped, and will not be able to initiate wireless resource control of the cell. (RRC, Radio Resource Control) reconstruction. However, the above-mentioned beam transmission mechanism will cause an increase in the overhead of the terminal.

In some application scenarios, the terminal usually remains connected after completing the random access process. For example, after a drone takes off, it usually only moves within a certain range. The drone will always remain connected in the air to achieve flight control and status monitoring through continuous user plane transmission. In addition, after the drone takes off, the base station uses a dedicated beam to provide services to the drone. In view of the above situation, the base station does not need to always send SSB beams to the sky. Based on this, in the embodiment of the present disclosure, the SSB beams of the first cell is divided into at least two parts, and the base station sends the first part of the SSB beams of the first cell or does not send the SSB beams of the first cell, and when the settings are satisfied If conditions exist, activate and/or transmit the SSB beams of the first cell; where the activated and/or sent SSB beams is part or all of the other SSB beams if the SSB beams is sent, or It is all or part of the SSB beams of the first cell without sending SSB beams. In the above solution, the base station does not need to transmit all the SSB beams of the first cell all the time, which accordingly reduces the terminal's measurement overhead of the SSB beams, and can also correspondingly reduce the interference of the side lobes of the SSB beams to the ground cell.

The present disclosure will be described in further detail below in conjunction with the accompanying drawings and embodiments.

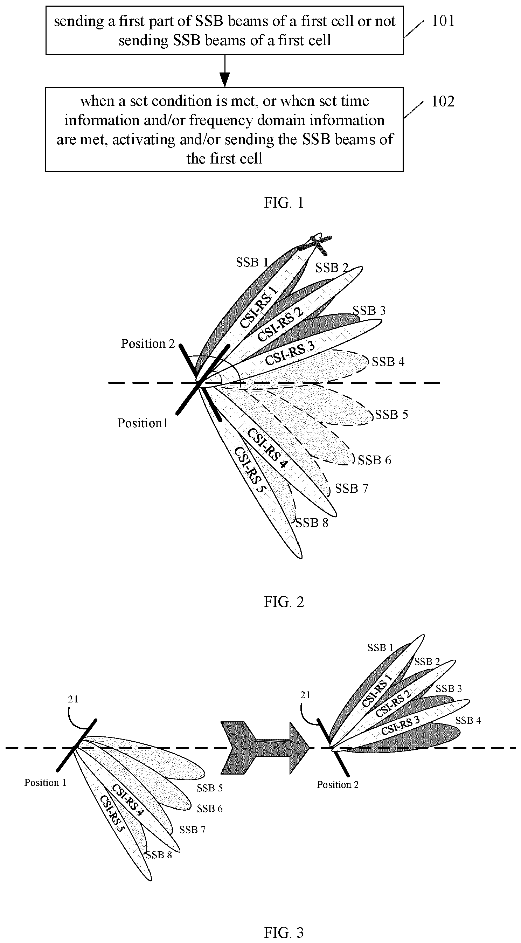

This embodiment of the present disclosure provides a beam sending method, which is applied to a base station. As shown in Fig. 1, the method includes:
Step 101: sending a first part of synchronization signal block (SSB) beams of a first cell or not sending SSB beams of a first cell.

The SSB beams of the first cell are divided into at least two parts.

Here, the base station divides the SSB beams of the first cell into at least two parts, and each part may include only one SSB beams or may include multiple SSB beams. For example, in practical applications, for terminals such as drones, the base station first sends m sets of SSB beams of the first cell. These m sets of SSB beams are used for ground coverage of the cell, so that the terminal can pass random signals when on the ground. The access process accesses the first cell. After that, for example, after the UAV terminal takes off and enters a certain altitude, the base station provides services to the terminal through dedicated beams. The base station does not send *n* sets of SSB beams for spatial coverage except for *the m* sets. Common beams other than the SSB beams, or only common beams that are part of the *n* sets of SSB beams other than the *m* sets of SSB beams used for spatial coverage, that is, the base station only sends the first part of the SSB beams of the first cell, or not transmit the SSB beams of the first cell.

It should be noted that all SSB beams of the first cell are divided into at least two parts, and the first part of the SSB beams of the first cell refers to a part of the SSB beams among the at least two parts of SSB beams, "the first" in "the first part" is not used to describe a specific order or sequence of SSB beams.

In this embodiment of the present disclosure, the terminal can implement cell search, cell discovery, cell selection and/or cell reselection based on SSB beams.

Step 102: when a set condition is met, or when set time information and/or frequency domain information are met, activating and/or sending the SSB beams of the first cell; the activated and/or sent SSB beams are part or all of other SSB beams if the SSB beams are sent, or all or part of the SSB beams of the first cell if the SSB beams are not sent.
where the SSB beams of the first cell is divided into at least two parts; the set time information and/or frequency domain information are configured by the network in advance through signaling.

In the case where the base station transmits the first part of the SSB beam of the first cell or does not transmit the SSB beam of the first cell, when the set conditions are met, or when the time information and/or frequency domain information configured by the network in advance through signaling is met, the base station activates and/or transmits all SSB beams of the first cell, or the base station activates and/or transmits part of the SSB beams of the first cell. Here, the part of the SSB beams of the first cell activated and/or transmitted by the base station may include the above-mentioned part of the SSB beam, or may not include the above-mentioned first part of the SSB beam, or may include part of the above-mentioned first part of the SSB beam.

where the set time information includes partial SSB activation/or transmission cycles, the duration of each cycle, specific time slots and/or time symbols occupied by SSB beams transmission; and/or, the set time information includes all SSB beams activation/or transmission cycles, the duration of each cycle, the specific time slots and/or time symbols occupied by SSB beams transmission; the set frequency domain information includes partial SSB beams activation/or transmission occupancy PRB location, PRB number and/or subcarrier spacing.

The set condition indicates that there is a need to transmit other SSB beams of the first cell except the first part of the SSB beams. The specific situation of meeting the set condition will be described in detail in the embodiment below. Based on the above solution, during the beam transmission process of the base station, there is no need to maintain the transmission of all SSB beams at all times. For the terminal, the measurement overhead can be reduced accordingly, and the interference of the side lobes of the SSB beams to the ground cells may also be reduced.

For example, in practical applications, for terminals such as drones, if a set condition is met, the SSB beams of the first cell are activated and/or sent, that is, if a set condition is met, the base station activates and/or transmit a common beam other than the *m* sets of SSB beams among the *n* sets of SSB beams used for spatial coverage.

In an embodiment, the sending the first part of the SSB beams of the first cell includes:
sending *m* sets of SSB beams; where
the *m* sets of SSB beams cover part of the first cell; or, the *m* sets of SSB beams are *m* sets of SSB beams among the *n* sets of SSB beams of the first cell ; *m* is greater than or equal to 1, and *m* is less than *n* ; *n* is greater than 1.
where the synchronization channel information of the SSB beams other than the *m* sets of SSB beams among the above *m* sets of SSB beams and the above *n* sets of SSB beams is the same or different.

As an implementation method, referring to Fig. 2, the first cell corresponds to the eight SSB beams SSB 1 to SSB 8. Each SSB beams can be understood as a set of SSB beams. In the example of Fig. 2, the three SSB 5 to SSB 7 are Each SSB beams is used as the normal SSB beams, that is, SSB 5-SSB 7 is regarded as the first part of the SSB beams, and SSB 5-SSB 7 is always sent. SSB 5-SSB 7 serve as normal SSB beams, and the corresponding configuration information is sent periodically through the ssb-PositionsInBurst information broadcasted in the system message. The terminal can access the first cell through SSB 5-SSB 7. Among the eight SSB beams corresponding to the first cell, the four SSB beams SSB 1 to SSB 4 serve as SSB beams to the air and do not need to be sent all the time. When a set condition is met, the base station activates and/or transmits all or part of the SSB beams in SSB 1~SSB 4.

As another implementation method, referring to Fig. 3, the first cell corresponds to the eight SSB beams SSB 1 to SSB 8. In the example of Fig. 3, these eight SSB beams are divided into two parts. In the illustrated position of the sending board 31 1, that is, when the sending plate is facing down, the base station sends SSB 5 to SSB 8. When the sending plate 31 is in position 2, that is, when the sending plate is facing up, the base station sends SSB 1 to SSB 4. In this way, the base station realizes the transmission of different parts of SSB beams by adjusting the angle between the sending plate and the horizon. In actual application, if the base station is configured with multiple sending boards, the base station can send SSB 1~SSB 8 at the same time. If the base station is configured with only one sending board, then at the same time, the base station can only send SSB 1~SSB 4 at the same time. Or send SSB 5-SSB 8 at the same time. The base station can broadcast two sets of ssb-PositionsInBurst information through system messages. ssb-PositionsInBurst 1 corresponds to the configuration information of SSB 1~SSB 4, and ssb-PositionsInBurst 2 corresponds to the configuration information of SSB 5-SSB 8.

In an embodiment, after the sending *m* sets of SSB beams, the activating and/or sending the SSB beams of the first cell includes:
activating and/or sending all or part of SSB beams except the *m* sets of SSB beams from the *n* sets of SSB beams; or,
stopping the sending of the *m* sets of SSB beams, and activating and/or transmitting all or part of SSB beams except the *m* sets of SSB beams from the *n* sets of SSB beams.

Here, the base station first transmits the first part m sets of SSB beams, and if a set condition is met, activates and/or transmits the remaining nm sets of SSB beams. And, in the case of activating and/or sending the remaining nm sets of SSB beams, the base station may continue sending the m sets of SSB beams of the first part, or stop sending the m sets of SSB beams of the first part, or continue sending the first part of SSB beams in m sets of SSB beams.

In an embodiment, before sending the first part of the SSB beams of the first cell or not sending the SSB beams of the first cell, the method further includes:
configuring the SSB beams of the first cell for a terminal through a system message or a radio resource control (RRC) signaling.

In actual application, the base station may only inform the terminal of the transmission state of the currently sent SSB beams, or may inform the terminal of the transmission state of all SSB beams. For the latter implementation, in one embodiment, configuring the SSB beams of the first cell for the terminal through system messages or RRC signaling includes:
indicating a transmission state of each part of the SSB beams in the at least two parts of the SSB beams through the system message or the RRC signaling.

Here, the base station can inform the terminal of the transmission state of the SSB beams in each part of the first cell. In this way, the terminal can determine which SSB beams are activated and in the transmission state based on the system message or RRC signaling sent by the base station, and determine which SSB beams are activated and in the transmission state based on the system message or RRC signaling sent by the base station. The configuration information of the status SSB beams completes the SSB beams measurement. Combined with the example of Fig. 3, after the terminal accesses the first cell, the base station notifies the terminal that SSB 1-SSB 4 is in the inactive state and SSB 5-SSB 8 is in the activated state by sending a system message or RRC signaling.

The following describes the situations where a set condition is met:

In an embodiment, activating and/or sending the SSB beams of the first cell when a set condition is met includes:
after receiving a first measurement event reported by the terminal, activating and/or sending the SSB beams of the first cell; where
the first measurement event indicates that the terminal has no available dedicated beam.

Here, the base station receiving the first measurement event reported by the terminal is regarded as meeting the set conditions. Here, the first measurement event is reported when the terminal detects that there is no available dedicated beam.

Specifically, the first measurement event is reported when the following conditions are met:
a measurement result of any dedicated beam by the terminal is lower than a first set threshold; and /or,
a block error rate (BLER) of data transmission by the terminal is higher than a second set threshold.

Among them, the BLER of data transmission by the terminal is higher than the second set threshold, which can be understood as the communication status of the terminal at this time is close to the trigger condition of Radio Link Failure (RLF, Radio Link Failure).

In an embodiment, activating and/or sending the SSB beams of the first cell may further include:
the base station measuring the uplink signal of the terminal or detecting the rate or traffic of data packets sent by the terminal in the uplink, and when the second measurement event is met, activating and/or sending the SSB beams of the first cell.
where the second measurement event indicates that the terminal has no available dedicated beam.

Here, the base station measures the uplink signal of the terminal or detects the rate or flow rate of the data packets sent by the terminal in the uplink to satisfy the second measurement event as meeting the set conditions. Here, the second measurement event is reported by the terminal when the terminal detects that no dedicated beam is available.

In actual application, the base station configures the trigger conditions for the first measurement event reporting for the terminal, including that the terminal's measurement results of the currently used and other available dedicated beams are lower than the first set threshold, and/or the BLER of the terminal's data transmission higher than the second set threshold. The above-mentioned triggering conditions for reporting the first measurement event all indicate that the terminal does not have available dedicated beams, or that the dedicated beams cannot guarantee the minimum communication requirements of the terminal. Therefore, when the terminal detects that the triggering conditions for reporting the first measurement event are met, the terminal reports to the base station the first measurement event, thereby triggering the base station to activate and/or transmit the SSB beams of the first cell.

In actual application, the base station configures the trigger condition for the terminal to detect the second measurement event, including configuring the terminal with information on the uplink signal to facilitate the base station to detect the second measurement event, including the code information sent, or/and the resource information sent.

In an embodiment, activating and/or sending the SSB beams of the first cell includes:
determining a codebook, a direction and a transmit power of the activated and/or sent SSB beams according to first information in the first measurement event;
the first information includes at least one of the following:
a measurement result of a dedicated beam by the terminal;
a height of the terminal;
a distance between the terminal and the base station;
a speed of the terminal;
a first angle, where the first angle represents an angle between a line connecting the terminal and the base station and the horizon.

In actual application, the first measurement event reported by the terminal includes an event identifier used to characterize the first measurement event, and also includes at least one item of the above-mentioned first information. The base station determines the information related to the above-mentioned first information based on the content reported by the terminal. Match the codebook, direction and transmit power of the SSB beams to determine which SSB beams needs to be activated and/or sent. The direction in which the base station transmits the SSB beams can be adjusted according to information such as the height of the terminal, the distance between the terminal and the base station, the speed of the terminal, and the first angle represented in the first information. The transmission power of the SSB beams sent by the base station can be adjusted according to the first information. The height of the terminal represented in the message is adjusted. For example, when the terminal is a drone, in the example of Fig. 2, the base station activates SSB 1-SSB 4 of the first cell to realize the transmission of SSB beams to the air, and sends SSB beams in the direction of the location of the drone, thereby providing communication guarantee for UAV aerial flight.

In an embodiment, when activating and/or sending the SSB beams of the first cell, the method further includes:
sending second information to the terminal; where
the second information represents configuration information corresponding to the activated and/or sent SSB beams.

In one embodiment, the second information includes at least one of the following:
indexes of SSB beams;
demodulation reference signal (DMRS) information corresponding to SSB beams;
remaining minimum system information corresponding to SSB beams.

In an embodiment, the second information is sent through dynamic DCI of PDCCH.

Here, the base station uses the dynamic DCI debugging information of the PDCCH to indicate to the terminal the relevant configuration of the SSB beams activated and/or sent by the base station, so that the terminal can start measurement on the corresponding SSB beams according to the configuration sent by the base station.

In actual application, after the base station activates and/or transmits a new SSB beams, when the terminal discovers an available dedicated beam, the terminal can notify the base station so that the base station stops sending all or part of the SSB beams. Therefore, when ensuring terminal communication, the measurement overhead of the terminal can be reduced in a timely manner. Based on this, in one embodiment, the method further includes:
receiving third information sent by the terminal; where the third information is sent when the terminal measures an available dedicated beam;

Stopping sending all or part of the SSB beams of the first cell based on the third information.

Here, the base station stops sending all or part of the SSB beams of the first cell based on the third information, which can be understood as the base station only continues to send the first part of the SSB beams of the first cell or does not send the SSB beams of the first cell, or the base station sends the other parts of SSB beams of the first cell.

In an embodiment, the terminal may send the above third information through a RAR message.

In one embodiment, the method further includes:
determining whether the SSB beams of each of the at least two parts of SSB beams are sent based on one of the following:
a quantity of terminals whose height is greater than a set height;
a Quality of service QoS requirement of the terminal.

Here, the base station selects the activated SSB beams in advance based on the above information. For example, when there are many terminals among the drones accessing the first cell whose height is greater than the set height, SSB 1-SSB 4 in the example in Fig. 3 can be activated to provide guarantee for the communication of these drones in the air. For another example, for drones with high QoS requirements, when the drone accesses the first cell and is in flight, in addition to providing a dedicated beam for the drone, SSB 1~ in the example in Fig. 3 can also be activated. SSB 4 to further ensure the QoS requirements of drones in the air.

In one embodiment, the method further includes:
determining whether the SSB beams of each of the at least two parts of SSB beams are sent based on according to a set route of the terminal, and/or determine the activation time point of the sent SSB beams.

In actual application, the base station can determine the SSB beams that needs to be activated and/or sent based on the first information in the first measurement event reported by the terminal, and can also determine the SSB beams that needs to be activated and/or sent based on the number of terminals with a height greater than the set height and/or the QoS requirements of the terminal. The SSB beams that need to be activated and/or sent can also be determined based on the set route of the terminal. For example, for drones, there is an application scenario in which a flight route is pre-set. Based on the location, altitude and other information involved in the set route, the base station can determine which part of the SSB beams of the first cell to activate and/or transmit, and further According to the flight route planning of the UAV, the base station can also determine the activation time point of the corresponding SSB beams. In this way, when the activation time point is reached, the UAV is about to fly into or fly into a certain area on the flight route. At this time, the base station activates the corresponding SSB beams to avoid cell interference caused by early activation of the SSB beams.

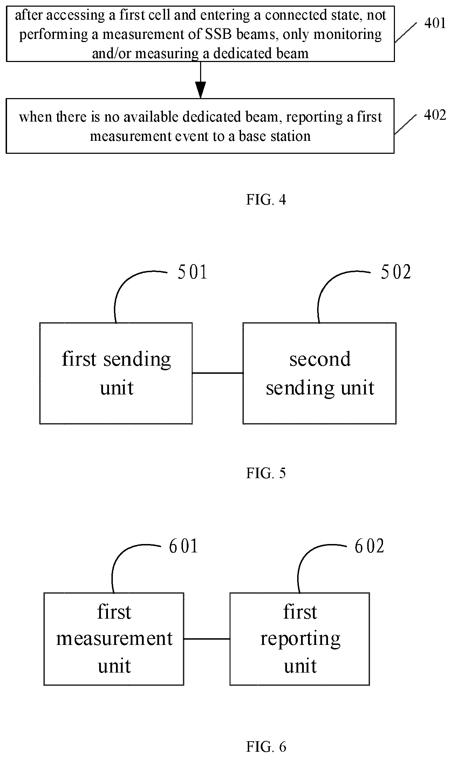

Correspondingly, the embodiment of the present disclosure also provides a beam measurement method, which is applied to the terminal. As shown in Fig. 4, the method includes:
Step 401: after accessing a first cell and entering a connected state, not performing a measurement of synchronization signal block (SSB) beams, only monitoring and/or measuring a dedicated beam.

In actual application, for terminals such as drones, the base station first sends all SSB beams of the first cell, and the terminal accesses the first cell through a random access process. After that, the base station provides services to the terminal through dedicated beams, and the base station no longer sends public beam or only sends part of the common beam, that is, the base station only sends the first part of the SSB beams of the first cell, or does not send the SSB beams of the first cell. Correspondingly, after the terminal accesses the first cell and is in the connected state, no SSB is performed. For beam measurement, only dedicated beam monitoring and/or measurements are performed.

Step 402: when there is no available dedicated beam, reporting a first measurement event to a base station.
where the first measurement event is used by the base station to activate and/or transmit all or part of the SSB beams of the first cell.

In one embodiment, the first measurement event is reported when the following conditions are met:
a measurement result of any dedicated beam by the terminal is lower than a first set threshold; and /or,
a block error rate (BLER) of data transmission by the terminal is higher than a second set threshold.

In actual application, the base station event configures the trigger conditions for the terminal to report the first measurement event, including that the terminal's measurement results of the currently used and other available dedicated beams are lower than the first set threshold, and /or the terminal performs data transmission. BLER is higher than the second set threshold. The above-mentioned triggering conditions for reporting the first measurement event all indicate that the terminal does not have available dedicated beams, or that the dedicated beams cannot guarantee the minimum communication requirements of the terminal. Therefore, when the terminal detects that the triggering conditions for reporting the first measurement event are met, the terminal reports to the base station the first measurement event, thereby triggering the base station to activate and/or transmit all or part of the SSB beams.

In one embodiment, the first measurement event includes first information; the first information includes at least one of the following:
a measurement result of a dedicated beam by the terminal;
a height of the terminal;
a distance between the terminal and the base station;
a speed of the terminal;
a first angle, where the first angle represents an angle between a line connecting the terminal and the base station and the horizon.

In actual application, the first measurement event reported by the terminal includes an event identifier used to characterize the first measurement event, and also includes at least one item of the above-mentioned first information. The base station determines the information related to the above-mentioned first information based on the content reported by the terminal. Match the codebook, direction and transmit power of the SSB beams to determine which SSB beams needs to be activated and/or sent. The direction in which the base station transmits the SSB beams can be adjusted according to information such as the height of the terminal, the distance between the terminal and the base station, the speed of the terminal, and the first angle represented in the first information. The transmission power of the SSB beams sent by the base station can be adjusted according to the first information. The height of the terminal represented in the message is adjusted. For example, when the terminal is a drone, in the example of Fig. 2, the base station activates SSB 1~SSB 4 of the first cell to realize the transmission of SSB beams to the air, and sends SSB beams in the direction of the location of the drone, thereby Provide communication guarantee for UAV aerial flight.

In one embodiment, the method further includes:
receiving second information sent by the base station; where
the second information represents configuration information corresponding to the SSB beams activated and/or sent by the base station.

In one embodiment, the second information includes at least one of the following:
indexes of SSB beams;
demodulation reference signal (DMRS) information corresponding to SSB beams;
remaining minimum system information corresponding to SSB beams.

In an embodiment, the second information is sent through DCI of PDCCH.

Here, the base station uses the dynamic DCI debugging information of the PDCCH to indicate to the terminal the relevant configuration of the SSB beams activated and/or sent by the base station, so that the terminal can start measurement on the corresponding SSB beams according to the configuration sent by the base station.

In actual application, after the base station activates and/or transmits a new SSB beams, when the terminal discovers an available dedicated beam, the terminal can notify the base station so that the base station stops sending all or part of the SSB beams, therefore, when ensuring terminal communication, the measurement overhead of the terminal can be reduced in a timely manner. Based on this, in one embodiment, the method further includes:
when the terminal measures an available dedicated beam, sending third information to the base station .
where the base station stops sending all or part of the SSB beams of the first cell based on the third information.

In one embodiment, the third information is sent through a RAR message.

In the above terminal side embodiment, the base station activates and/or sends all or part of the SSB beams of the first cell based on the first measurement event actively reported by the terminal. In addition, as can be known from the above base station side embodiments, the base station may not activate and/or transmit all or part of the SSB beams of the first cell through the first measurement event, but may activate and/or transmit all or part of the SSB beams of the first cell according to the number of terminals with a height greater than the set height and/or The QoS requirements of the terminal determine the need to activate and/or transmit the SSB beams of the first cell, or the base station determines the need to activate and/or transmit the SSB beams of the first cell according to the set route of the terminal, and further, the base station can determine the need to activate and/or transmit the SSB beams of the first cell according to the terminal's set route. The set route is used to determine the activation time point of the SSB beams. In addition, the base station will indicate to the terminal the transmission status of the SSB beams in each part of the first cell through system messages or RRC signaling. The terminal can determine which SSB beams are activated and in transmission state based on the system messages or RRC signaling sent by the base station, and complete SSB beam measurement based on the configuration information of the SSB beam in the transmitting state.

Specifically, after the terminal determines which SSB beams are in the sending state, based on the configuration information of this part of the SSB beams, the terminal can determine the format of the corresponding GAP, determine the selection set of PRACH and preamble, and/or switch to the SSB being sent. On the resource block of the BWP corresponding to the beam.

In the implementation of this application, the SSB beams of the first cell is divided into at least two parts. The base station sends the first part of the SSB beams of the first cell or does not send the SSB beams of the first cell, and when a set condition is met, Activating and/or sending the SSB beams of the first cell; where the activated and/or sent SSB beams is part or all of the other SSB beams if the SSB beams is sent, or no SSB beams is sent In this case, all or part of the SSB beams of the first cell. In the above solution, the base station does not need to transmit all the SSB beams of the first cell all the time, which accordingly reduces the terminal's measurement overhead of the SSB beams, and can also correspondingly reduce the interference of the side lobes of the SSB beams to the ground cell.

In order to implement the method of the embodiment of the present disclosure, the embodiment of the present disclosure also provides a beam sending device, which is arranged on the base station. As shown in Fig. 5, the device includes:
a first sending unit 501, configured to send a first part of synchronization signal block (SSB) beams of a first cell or not sending SSB beams of a first cell;
a second sending unit 502, configured to, when a set condition is met, or when set time information and/or frequency domain information are met, activate and/or send the SSB beams of the first cell; the activated and/or sent SSB beams are part or all of other SSB beams if the SSB beams are sent, or all or part of the SSB beams of the first cell if the SSB beams are not sent; where
the SSB beams of the first cell are divided into at least two parts; the set time information and/or frequency domain information are configured by a network in advance through a signaling.

The first sending unit 501 is configured to perform:
sending *m* sets of SSB beams; where
the *m* sets of SSB beams cover part of the first cell; or, the *m* sets of SSB beams are *m* sets of SSB beams among the *n* sets of SSB beams of the first cell ; *m* is greater than or equal to 1, and *m* is less than *n* ; *n* is greater than 1.

The second sending unit 502 is configured to perform:
activating and/or sending all or part of SSB beams except the *m* sets of SSB beams from the *n* sets of SSB beams; or,
stopping the sending of the *m* sets of SSB beams, and activating and/or transmitting all or part of SSB beams except the *m* sets of SSB beams from the *n* sets of SSB beams.

The device further includes:
a first configuration unit, configured to configure the SSB beams of the first cell for a terminal through a system message or a radio resource control (RRC) signaling.

The first configuration unit 501 is further configured to perform:
indicating a transmission state of each part of the SSB beams in the at least two parts of the SSB beams through the system message or the RRC signaling.

The second sending unit 502 is configured to perform:
after receiving a first measurement event reported by the terminal, activating and/or sending the SSB beams of the first cell; where
the first measurement event indicates that the terminal has no available dedicated beam.

The first measurement event is reported when the following conditions are met:
a measurement result of any dedicated beam by the terminal is lower than a first set threshold; and /or,
a block error rate (BLER) of data transmission by the terminal is higher than a second set threshold.

The device further includes:
a first determining unit, configured to perform determining a codebook, a direction and a transmit power of the activated and/or sent SSB beams according to first information in the first measurement event;
the first information includes at least one of the following:
a measurement result of a dedicated beam by the terminal;
a height of the terminal;
a distance between the terminal and the base station;
a speed of the terminal;
a first angle, where the first angle represents an angle between a line connecting the terminal and the base station and the horizon.

The device further comprises a third unit configured to perform:
sending second information to the terminal; where
the second information represents configuration information corresponding to the activated and/or sent SSB beams.

The second information includes at least one of the following:
indexes of SSB beams;
demodulation reference signal (DMRS) information corresponding to SSB beams;
remaining minimum system information corresponding to SSB beams.

The second information is sent through dynamic downlink control information (DCI) of a physical downlink control channel (PDCCH).

The device further includes:
a second receiving unit, configured to receive third information sent by the terminal; where the third information is sent when the terminal measures an available dedicated beam;
a fourth sending unit, configured stop sending all or part of the SSB beams of the first cell based on the third information.

The third information is sent through a Random Access Response (RAR) message.

The device further includes:
a second determining unit, configured to determine whether the SSB beams of each of the at least two parts of SSB beams are sent based on one of the following:
a quantity of terminals whose height is greater than a set height;
a Quality of service QoS requirement of the terminal.

The device further includes:
a third determining unit, configured to determine whether the SSB beams of each of the at least two parts of SSB beams are sent based on according to a set route of the terminal, and/or determine the activation time point of the sent SSB beams.

In actual application, the first sending unit 501, the second sending unit 502, the third sending unit, the first receiving unit, and the fourth sending unit may be implemented by the communication interface in the beam sending device; the first configuration unit, the third sending unit The first determination unit, the second determination unit and the third determination unit may be implemented by a processor in the beam sending device.

It should be noted that when the beam sending device provided in the above embodiment performs beam sending, only the division of the above program modules is used as an example. In actual applications, the above processing can be allocated to different program modules according to needs. That is, the internal structure of the device is divided into different program modules to complete all or part of the processing described above. In addition, the beam sending device and the beam sending method embodiment provided in the above embodiments belong to the same concept. Please refer to the method embodiment for details of the specific implementation process, which will not be described again here.

In order to implement the method on the terminal side in the embodiment of the present disclosure, the embodiment of the present disclosure also provides a beam measurement device, which is provided on the terminal. As shown in Fig. 6, the device includes:
a first measurement unit 601, configured to, after accessing a first cell and entering a connected state, not perform a measurement of synchronization signal block (SSB) beams, only monitor and/or measure a dedicated beam;
a first reporting unit 602, configured to, when there is no available dedicated beam, report a first measurement event to a base station; where
the first measurement event is used by the base station to activate and/or send all or part of the SSB beams of the first cell.

The first measurement event is reported when the following conditions are met:
a measurement result of any dedicated beam by the terminal is lower than a first set threshold; and /or,
a block error rate (BLER) of data transmission by the terminal is higher than a second set threshold.

The first information includes at least one of the following:
a measurement result of a dedicated beam by the terminal;
a height of the terminal;
a distance between the terminal and the base station;
a speed of the terminal;
a first angle, where the first angle represents an angle between a line connecting the terminal and the base station and the horizon.

The device further includes:
a second receiving unit, configured to receive second information sent by the base station; where
the second information represents configuration information corresponding to the SSB beams activated and/or sent by the base station.

The second information includes at least one of the following:
indexes of SSB beams;
demodulation reference signal (DMRS) information corresponding to SSB beams;
remaining minimum system information corresponding to SSB beams.

The second information is sent through DCI of a PDCCH.

The device further includes:
a fifth sending unit, configured to, when the terminal measures an available dedicated beam, send third information to the base station; where
the base station stops sending all or part of the SSB beams of the first cell based on the third information.

The third information is sent via a RAR message.

In actual application, the first measurement unit 601, the first reporting unit 602, the second receiving unit and the fifth sending unit may be implemented by the communication interface in the beam measurement device.

It should be noted that when the beam measurement device provided in the above embodiment performs beam measurement, only the division of the above program modules is used as an example. In actual applications, the above processing can be allocated to different program modules as needed. That is, the internal structure of the device is divided into different program modules to complete all or part of the processing described above. In addition, the beam measurement device provided by the above embodiments and the beam measurement method embodiments belong to the same concept. Please refer to the method embodiments for the specific implementation process, which will not be described again here.

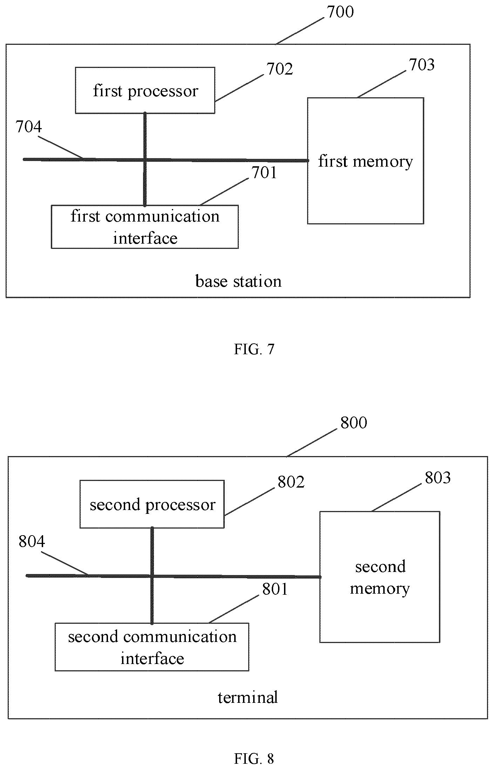

Based on the hardware implementation of the above program module, and in order to implement the method on the base station side of the embodiment of the present disclosure, the embodiment of the present disclosure also provides a base station. As shown in Fig. 7, the base station 700 includes :
the first communication interface 701 capable of interacting information with other network nodes;

The first processor 702 is connected to the first communication interface 7 01 to implement information interaction with other network nodes, and is configured to execute the method provided by one or more technical solutions on the base station side when running a computer program. The computer program is stored on the first memory 703.

Specifically, the first communication interface 701 is configured to send a first part of synchronization signal block (SSB) beams of a first cell or not sending SSB beams of a first cell; a second sending unit, configured to, when a set condition is met, or when set time information and/or frequency domain information are met, activate and/or send the SSB beams of the first cell; the activated and/or sent SSB beams are part or all of other SSB beams if the SSB beams are sent, or all or part of the SSB beams of the first cell if the SSB beams are not sent; where
the SSB beams of the first cell are divided into at least two parts; the set time information and/or frequency domain information are configured by a network in advance through a signaling.

In one embodiment, the sending the first part of the SSB beams of the first cell includes:
sending *m* sets of SSB beams; where
the *m* sets of SSB beams cover part of the first cell; or, the *m* sets of SSB beams are *m* sets of SSB beams among the *n* sets of SSB beams of the first cell ; *m* is greater than or equal to 1, and *m* is less than *n* ; *n* is greater than 1.

The first communication interface 701 is configured to perform:
activating and/or sending all or part of SSB beams except the *m* sets of SSB beams from the *n* sets of SSB beams; or,
stopping the sending of the *m* sets of SSB beams, and activating and/or transmitting all or part of SSB beams except the *m* sets of SSB beams from the *n* sets of SSB beams.

The first processor 702 is configure to configure the SSB beams of the first cell for a terminal through a system message or a radio resource control (RRC) signaling before sending a first part of synchronization signal block (SSB) beams of a first cell or not sending SSB beams of a first cell.

The first processor 702 is further configured to perform:
indicating a transmission state of each part of the SSB beams in the at least two parts of the SSB beams through the system message or the RRC signaling.

The first communication interface 701 is configured to perform:
after receiving a first measurement event reported by the terminal, activating and/or sending the SSB beams of the first cell; where
the first measurement event indicates that the terminal has no available dedicated beam.

The first measurement event is reported when the following conditions are met:
a measurement result of any dedicated beam by the terminal is lower than a first set threshold; and /or,
a block error rate (BLER) of data transmission by the terminal is higher than a second set threshold.

The first processor 702 configured to perform determining a codebook, a direction and a transmit power of the activated and/or sent SSB beams according to first information in the first measurement event;
the first information includes at least one of the following:
a measurement result of a dedicated beam by the terminal;
a height of the terminal;
a distance between the terminal and the base station;
a speed of the terminal;
a first angle, where the first angle represents an angle between a line connecting the terminal and the base station and the horizon.

The first communication interface 701 is configured to perform:
sending second information to the terminal; where
the second information represents configuration information corresponding to the activated and/or sent SSB beams.

The second information includes at least one of the following:
indexes of SSB beams;
demodulation reference signal (DMRS) information corresponding to SSB beams;
remaining minimum system information corresponding to SSB beams.

The second information is sent through dynamic downlink control information (DCI) of a physical downlink control channel (PDCCH).

The first communication interface 701 is configured to perform:
receive third information sent by the terminal; where the third information is sent when the terminal measures an available dedicated beam;
a fourth sending unit, configured stop sending all or part of the SSB beams of the first cell based on the third information.

The third information is sent through a Random Access Response (RAR) message.

The first processor 702 is configured to determine whether the SSB beams of each of the at least two parts of SSB beams are sent based on one of the following:
a quantity of terminals whose height is greater than a set height;
a Quality of service QoS requirement of the terminal.

The first processor 702 is configured to determine whether the SSB beams of each of the at least two parts of SSB beams are sent based on according to a set route of the terminal, and/or determine the activation time point of the sent SSB beams.

It should be noted that the specific processing procedures of the first processor 702 and the first communication interface 701 can be understood with reference to the above method.

Of course, in practical applications, the various components in the base station 700 are coupled together through the bus system 704. It will be appreciated that the bus system 704 is configured to enable connected communications between these components. In addition to the data bus, the bus system 704 also includes a power bus, a control bus and a status signal bus. However, for the sake of clarity, various buses are labeled as bus system 704 in Fig. 7.

The first memory 703 in the embodiment of the present disclosure is configured to store various types of data to support the operation of the base station 700. Examples of such data include: any computer program configured to operate on base station 700.

The method disclosed in the above embodiment of the present disclosure can be applied to the first processor 702, or implemented by the first processor 702. The first processor 702 may be an integrated circuit chip with signal processing capabilities. During the implementation process, each step of the above method can be completed by instructions in the form of hardware integrated logic circuits or software in the first processor 702. The above-mentioned first processor 702 may be a general processor, a digital signal processor (DSP), or other programmable logic devices, discrete gate or transistor logic devices, discrete hardware components, etc. The first processor 702 can implement or execute the disclosed methods, steps and logical block diagrams in the embodiments of this application. A general-purpose processor may be a microprocessor or any conventional processor, etc. The steps of the method disclosed in the embodiments of this application can be directly implemented by a hardware decoding processor, or executed by a combination of hardware and software modules in the decoding processor. The software module may be located in a storage medium, and the storage medium is located in the first memory 703. The first processor 7 02 reads the information in the first memory 703 and completes the steps of the foregoing method in combination with its hardware.

In an exemplary embodiment, the base station 700 may be configured by one or more application specific integrated circuits (ASICs , Application Specific Integrated Circuits), DSPs , programmable logic devices (PLDs , Programmable Logic Devices), complex programmable logic devices (CPLDs), Complex Programmable Logic Device), Field-Programmable Gate Array (FPGA , Field-Programmable Gate Array), general-purpose processor, controller, microcontroller (MCU , Micro Controller Unit), microprocessor ( Microprocessor), or other electronic Component implementation, used to execute the aforementioned methods.

Based on the hardware implementation of the above program module, and in order to implement the method on the terminal side of the embodiment of the present disclosure, the embodiment of the present disclosure also provides a terminal. As shown in Fig. 8, the terminal 800 includes :

The second communication interface 801 is capable of interacting information with other network nodes;

The second processor 802 is connected to the second communication interface 8 01 to implement information interaction with other network nodes, and is configured to execute the method provided by one or more technical solutions on the terminal side when running a computer program. The computer program is stored on the second memory 803.

Specifically, the second communication interface 801 is configured to:
after accessing a first cell and entering a connected state, not perform a measurement of synchronization signal block (SSB) beams, only monitor and/or measure a dedicated beam, and when there is no available dedicated beam, report a first measurement event to a base station; where
the first measurement event is used by the base station to activate and/or send all or part of the SSB beams of the first cell.

The first measurement event is reported when the following conditions are met:
a measurement result of any dedicated beam by the terminal is lower than a first set threshold; and /or,
a block error rate (BLER) of data transmission by the terminal is higher than a second set threshold.

The first information includes at least one of the following:
a measurement result of a dedicated beam by the terminal;
a height of the terminal;
a distance between the terminal and the base station;
a speed of the terminal;
a first angle, where the first angle represents an angle between a line connecting the terminal and the base station and the horizon.

The second communication interface 801 is configured to receive second information sent by the base station; where
the second information represents configuration information corresponding to the SSB beams activated and/or sent by the base station.

The second information includes at least one of the following:
indexes of SSB beams;
demodulation reference signal (DMRS) information corresponding to SSB beams;
remaining minimum system information corresponding to SSB beams.

The second information is sent through DCI of a PDCCH.

The second communication interface 801 is configured to, when the terminal measures an available dedicated beam, send third information to the base station; where
the base station stops sending all or part of the SSB beams of the first cell based on the third information.

The third information is sent via a RAR message.

It should be noted that the specific processing procedures of the second processor 802 and the second communication interface 801 can be understood with reference to the above method.

Of course, in practical applications, the various components in the terminal 800 are coupled together through the bus system 804. It will be appreciated that the bus system 804 is configured to enable connected communications between these components. In addition to the data bus, the bus system 8 04 also includes a power bus, a control bus and a status signal bus. However, for the sake of clarity, various buses are labeled as bus system 8 04 in Fig. 8.

The second memory 803 in the embodiment of the present disclosure is configured to store various types of data to support the operation of the terminal 800. Examples of such data include: any computer program configured to operate on terminal 800.

The methods disclosed in the above embodiments of the present disclosure can be applied to the second processor 802 or implemented by the second processor 802. The second processor 802 may be an integrated circuit chip with signal processing capabilities. During the implementation process, each step of the above method can be completed by instructions in the form of hardware integrated logic circuits or software in the second processor 802. The above-mentioned second processor 802 may be a general processor, a DSP, or other programmable logic devices, discrete gate or transistor logic devices, discrete hardware components, etc. The second processor 802 can implement or execute the disclosed methods, steps and logical block diagrams in the embodiments of this application. A general-purpose processor may be a microprocessor or any conventional processor, etc. The steps of the method disclosed in the embodiments of this application can be directly implemented by a hardware decoding processor, or executed by a combination of hardware and software modules in the decoding processor. The software module may be located in a storage medium, which is located in the second memory 803. The second processor 8 02 reads the information in the second memory 803 and completes the steps of the foregoing method in combination with its hardware.

In an exemplary embodiment, the terminal 800 may be implemented by one or more ASICs, DSPs, PLDs, CPLDs, FPGAs, general processors, controllers, MCUs, Microprocessors, or other electronic components for performing the foregoing methods.

The first memory 703 and second memory 803 in the embodiment of the present disclosure may be a volatile memory or a non-volatile memory, or may include both volatile and non-volatile memories. Among them, non-volatile memory can be read-only memory (ROM, Read Only Memory), programmable read-only memory (PROM, Programmable Read-Only Memory), erasable programmable read-only memory (EPROM, Erasable Programmable Read-Only Memory). Only Memory), Electrically Erasable Programmable Read-Only Memory ( EEPROM , Electrically Erasable Programmable Read-Only Memory), Magnetic Random Access Memory ( FRAM , ferromagnetic random access memory), Flash Memory ( Flash Memory), Magnetic Surface Memory , optical disk, or compact disk ( CD-ROM , Compact Disc Read-Only Memory); the magnetic surface memory can be disk storage or tape storage. Volatile memory can be random access memory (RAM, Random Access Memory), which is used as an external cache. By way of illustration, but not limitation, many forms of RAM are available, such as Static Random Access Memory ( SRAM), Synchronous Static Random Access Memory ( SSRAM) , Dynamic Random Access Memory Memory ( DRAM , Dynamic Random Access Memory), synchronous dynamic random access memory ( SDRAM , Synchronous Dynamic Random Access Memory), double data rate synchronous dynamic random access memory ( DDRSDRAM , Double Data Rate Synchronous Dynamic Random Access Memory), enhanced Type synchronous dynamic random access memory ( ESDRAM , Enhanced Synchronous Dynamic Random Access Memory), synchronously linked dynamic random access memory ( SLDRAM, SyncLink Dynamic Random Access Memory), direct memory bus random access memory ( DRRAM , Direct Rambus Random Access Memory)). The memories described in the embodiments of the present disclosure are intended to include, but are not limited to, these and any other suitable types of memories.

In an exemplary embodiment, the embodiment of the present disclosure also provides a storage medium, that is, a computer storage medium, specifically a computer-readable storage medium, for example, including a first memory 703 that stores a computer program. The above computer program can be executed by the first processor 702 of the base station 700 to complete the steps described in the foregoing base station side method. Another example includes a second memory 8 03 that stores a computer program. The above computer program can be executed by the second processor 8 02 of the terminal 8 00 to complete the steps of the aforementioned terminal side method. The computer-readable storage medium may be FRAM, ROM, PROM, EPROM, EEPROM, Flash Memory, magnetic surface memory, optical disk, or CD-ROM and other memories.

It should be noted that "first", "second", etc. are used to distinguish similar objects and are not necessarily used to describe a specific order or sequence.

In addition, the technical solutions described in the embodiments of this application can be combined arbitrarily as long as there is no conflict.

The above descriptions are only preferred embodiments of the present disclosure and are not intended to limit the protection scope of the present disclosure.

## Claims

1. A beam sending method, applied to a base station, comprising:
sending a first part of synchronization signal block (SSB) beams of a first cell or not sending SSB beams of a first cell;
when a set condition is met, or when set time information and/or frequency domain information are met, activating and/or sending the SSB beams of the first cell; the activated and/or sent SSB beams are part or all of other SSB beams if the SSB beams are sent, or all or part of the SSB beams of the first cell if the SSB beams are not sent; wherein
the SSB beams of the first cell are divided into at least two parts; the set time information and/or frequency domain information are configured by a network in advance through a signaling.

2. The method according to claim 1, wherein the sending the first part of the SSB beams of the first cell comprises:
sending *m* sets of SSB beams; wherein
the *m* sets of SSB beams cover part of the first cell; or, the *m* sets of SSB beams are *m* sets of SSB beams among the *n* sets of SSB beams of the first cell ; *m* is greater than or equal to 1, and *m* is less than *n* ; *n* is greater than 1.

3. The method according to claim 2, wherein after the sending *m* sets of SSB beams, the activating and/or sending the SSB beams of the first cell comprises:
activating and/or sending all or part of SSB beams except the *m* sets of SSB beams from the *n* sets of SSB beams; or,
stopping the sending of the *m* sets of SSB beams, and activating and/or transmitting all or part of SSB beams except the *m* sets of SSB beams from the *n* sets of SSB beams.

4. The method according to claim 1, wherein prior to the sending the first part of the SSB beams of the first cell or not sending the SSB beams of the first cell, the method further comprises:
configuring the SSB beams of the first cell for a terminal through a system message or a radio resource control (RRC) signaling.

5. The method according to claim 4, wherein the configuring the SSB beams of the first cell for the terminal through the system message or the RRC signaling comprises:
indicating a transmission state of each part of the SSB beams in the at least two parts of the SSB beams through the system message or the RRC signaling.

6. The method according to any one of claims 1 to 5, wherein when the set condition is met, the activating and/or sending the SSB beams of the first cell comprises:
after receiving a first measurement event reported by the terminal, activating and/or sending the SSB beams of the first cell; wherein
the first measurement event indicates that the terminal has no available dedicated beam.

7. The method according to claim 6, wherein the first measurement event is reported when the following conditions are met:
a measurement result of any dedicated beam by the terminal is lower than a first set threshold; and /or,
a block error rate (BLER) of data transmission by the terminal is higher than a second set threshold.

8. The method according to claim 6, further comprising:
determining a codebook, a direction and a transmit power of the activated and/or sent SSB beams according to first information in the first measurement event;
the first information comprises at least one of the following:
a measurement result of a dedicated beam by the terminal;
a height of the terminal;
a distance between the terminal and the base station;
a speed of the terminal;
a first angle, wherein the first angle represents an angle between a line connecting the terminal and the base station and the horizon.

9. The method according to claim 6, wherein when activating and/or sending the SSB beams of the first cell, the method further comprises:
sending second information to the terminal; wherein
the second information represents configuration information corresponding to the activated and/or sent SSB beams.

10. The method according to claim 9, wherein the second information comprises at least one of the following:
indexes of SSB beams;
demodulation reference signal (DMRS) information corresponding to SSB beams;
remaining minimum system information corresponding to SSB beams.

11. The method according to claim 9, wherein the second information is sent through dynamic downlink control information (DCI) of a physical downlink control channel (PDCCH).

12. The method according to claim 6, further comprising:
receiving third information sent by the terminal; wherein the third information is sent when the terminal measures an available dedicated beam;
stopping sending all or part of the SSB beams of the first cell based on the third information.

13. The method according to claim 12, wherein the third information is sent through a Random Access Response (RAR) message.

14. The method according to claim 1, further comprising:
determining whether the SSB beams of each of the at least two parts of SSB beams are sent based on one of the following:
a quantity of terminals whose height is greater than a set height;
a Quality of service QoS requirement of the terminal.

15. The method according to claim 1, further comprising:
determining whether the SSB beams of each of the at least two parts of SSB beams are sent based on according to a set route of the terminal, and/or determine the activation time point of the sent SSB beams.

16. A beam measurement method, applied to a terminal, comprising:
after accessing a first cell and entering a connected state, not performing a measurement of synchronization signal block (SSB) beams, only monitoring and/or measuring a dedicated beam;
when there is no available dedicated beam, reporting a first measurement event to a base station; wherein
the first measurement event is used by the base station to activate and/or send all or part of the SSB beams of the first cell.

17. The method according to claim 16, wherein the first measurement event is reported when the following conditions are met:
a measurement result of any dedicated beam by the terminal is lower than a first set threshold; and /or,
a block error rate (BLER) of data transmission by the terminal is higher than a second set threshold.

18. The method according to claim 16, wherein the first measurement event comprises first information; the first information comprises at least one of the following:
a measurement result of a dedicated beam by the terminal;
a height of the terminal;
a distance between the terminal and the base station;
a speed of the terminal;
a first angle, wherein the first angle represents an angle between a line connecting the terminal and the base station and the horizon.

19. The method according to claim 16, further comprising:
receiving second information sent by the base station; wherein
the second information represents configuration information corresponding to the SSB beams activated and/or sent by the base station.

20. The method according to claim 19, wherein the second information comprises at least one of the following:
indexes of SSB beams;
demodulation reference signal (DMRS) information corresponding to SSB beams;
remaining minimum system information corresponding to SSB beams.

21. The method according to claim 20, wherein the second information is sent through DCI of a PDCCH.

22. The method according to claim 16, further comprising:
when the terminal measures an available dedicated beam, sending third information to the base station; wherein
the base station stops sending all or part of the SSB beams of the first cell based on the third information.

23. The method of claim 22, wherein the third information is sent via a RAR message.

24. A beam sending device, comprising:
a first sending unit, configured to send a first part of synchronization signal block (SSB) beams of a first cell or not sending SSB beams of a first cell;
a second sending unit, configured to, when a set condition is met, or when set time information and/or frequency domain information are met, activate and/or send the SSB beams of the first cell; the activated and/or sent SSB beams are part or all of other SSB beams if the SSB beams are sent, or all or part of the SSB beams of the first cell if the SSB beams are not sent; wherein
the SSB beams of the first cell are divided into at least two parts; the set time information and/or frequency domain information are configured by a network in advance through a signaling.

25. A beam measurement device, comprising:
a first measurement unit, configured to, after accessing a first cell and entering a connected state, not perform a measurement of synchronization signal block (SSB) beams, only monitor and/or measure a dedicated beam;
a first reporting unit, configured to, when there is no available dedicated beam, report a first measurement event to a base station; wherein
the first measurement event is used by the base station to activate and/or send all or part of the SSB beams of the first cell.

26. A base station, comprising: a first processor and a first communication interface; wherein
the first communication interface is configured to: send a first part of the SSB beams of the first cell or not to send the SSB beams of the first cell, and when a set condition is met, or when set time information and/or frequency domain information are met, activate and/or send the SSB beams of the first cell; wherein the activated and/or sent SSB beams are part or all of other SSB beams if the SSB beams are sent, or all or part of the SSB beams of the first cell if the SSB beams are not sent; wherein
the SSB beams of the first cell are divided into at least two parts; the set time information and/or frequency domain information are configured by a network in advance through a signaling.

27. A terminal, comprising: a second processor and a second communication interface; wherein
the second communication interface is configured to, after accessing a first cell and entering a connected state, not perform a measurement of synchronization signal block (SSB) beams, only monitor and/or measure a dedicated beam, and when there is no available dedicated beam, report a first measurement event to a base station; wherein,
the first measurement event is used by the base station to activate and/or send all or part of the SSB beams of the first cell.

28. A base station, comprising: a first processor and a first memory configured to store a computer program executable on the processor,
wherein the first processor is configured to, when executing the computer program, perform the steps of the method according to any one of claims 1 to 15.

29. A terminal, comprising: a second processor and a second memory configured to store a computer program executable on the processor,
wherein the second processor is configured to, when executing the computer program, perform the steps of the method of any one of claims 16 to 23.

30. A storage medium, wherein a computer program is stored in the storage medium, and the computer program, when executed by a processor, performs the steps of the method according to any one of claims 1 to 15, or performs the method according to any one of claims 16 to 23.
